Europäisches Patentamt

European Patent Office

Office européen des brevets

(19)

(11) Numéro de publication : **0 149 568**
**B1**

(12)

# FASCICULE DE BREVET EUROPÉEN

(45) Date de publication du fascicule du brevet :
09.08.89

(51) Int. Cl.⁴ : **G 01 L   7/08**

(21) Numéro de dépôt : 85400005.6

(22) Date de dépôt : 04.01.85

(54) **Diaphragme ondulé pour capteur de pression.**

(30) Priorité : 06.01.84 FR 8400166

(43) Date de publication de la demande :
24.07.85 Bulletin 85/30

(45) Mention de la délivrance du brevet :
09.08.89 Bulletin 89/32

(84) Etats contractants désignés :
BE CH DE GB IT LI NL

(56) Documents cités :
FR—A—   524 721
FR—A— 1 474 157
GB—A—   749 551
GB—A— 2 086 586
US—A— 4 375 182

(73) Titulaire : SCHLUMBERGER INDUSTRIES
50, avenue Jean Jaurès
F-92120 Montrouge (FR)

(72) Inventeur : Bertrand, Pierre
1, rue Guynemer
F-91430 Igny (FR)

(74) Mandataire : Dronne, Guy et al
SCHLUMBERGER INDUSTRIES Groupe Transactions
Electroniques BP 620-04
F-92542 Montrouge Cédex (FR)

Jouve, 18, rue St-Denis, 75001 Paris, France

EP 0 149 568 B1

## Description

La présente invention concerne un diaphragme ondulé pour capteur de pression.

De façon plus précise, la présente invention concerne un diaphragme servant d'élément sensible dans un capteur de pression, notamment dans un capteur de pression différentielle, ce diaphragme étant du type ondulé.

Les diaphragmes pour capteur de pression se présentent, le plus souvent, sous la forme d'un disque en métal de très faible épaisseur, par exemple de l'ordre du dixième de millimètre, dont la périphérie est destinée à être encastrée, par exemple, dans le corps du capteur. Sous l'effet de la différence des pressions appliquées de part et d'autre du diaphragme, celui-ci se déforme et le déplacement du centre du diaphragme qui en résulte est mesuré. Cette mesure de déplacement permet d'en déduire la valeur de la différence de pression.

Les diaphragmes qui sont formés par un disque qui est plan au repos, présentent une très bonne flexibilité. En outre, la position de repos du centre d'un tel diaphragme (c'est-à-dire lorsque les pressions régant de part et d'autre du diaphragme sont égales) est relativement insensible aux variations de température, de pression statique (même pression appliquée sur les deux faces du diaphragme) ou d'effort de serrage du corps du capteur sur la périphérie du diaphragme. En revanche la zone linéaire de la courbe représentant le déplacement du centre du diaphragme en fonction de la pression différentielle qui lui est appliquée correspond à une plage de déplacement réduite.

Pour remédier à ce défaut de réponse du diaphragme, il est bien connu d'utiliser des diaphragmes du type ondulé. Un tel diaphragme est, par exemple, décrit dans le brevet français 2 016 115. La feuille mince formant le diaphragme est usinée, par exemple emboutie pour présenter des ondulations concentriques à partir du centre du diaphragme formant ainsi une alternance de « bosses » et de « creux » depuis sa périphérie jusqu'au centre. Le diaphragme est de révolution autour d'un axe perpendiculaire à son plan moyen. Du fait des ondulations, le diaphragme présente une réponse déplacement/pression différentielle sensiblement linéaire dans un domaine de déplacements beaucoup plus étendu.

Cependant, les diaphragmes ondulés de révolution connus présentent l'inconvénient d'être très sensibles aux variations de température, de pression statique et de serrage de la périphérie du diaphragme dans le corps du capteur. L'effet de ces influences parasites se fait notamment sentir sur le zéro du capteur (position du centre du diaphragme lorsque la pression différentielle qui lui est appliquée est nulle) et sur la sensibilité du capteur.

En effet, lors de variations de température ou de serrage de la membrane à l'encastrement ou encore de déformations dues à la pression statique, la périphérie du diaphragme est soumise à des variations de rayon imposées par les déformations relatives du corps (par exemple la dilatation thermique différentielle entre le corps du capteur et la membrane).

Ces variations de rayons provoquent une variation de la sensibilité du diaphragme que celui-ci soit plan ou comporte des ondulations de révolution autour de l'axe du diaphragme. Ces variations de rayon provoquent également un changement de la position du centre du diaphragme sauf dans le cas où le diaphragme est plan du fait de sa symétrie de part et d'autre du plan d'encastrement du diaphragme.

Dans le cas des diaphragmes plans le centre reste immobile sous l'effet des variations de rayon, puisque les contraintes radiales en résultant sont dans le plan de symétrie du diaphragme. Au contraire, dans le cas des diaphragmes ondulés de révolution le plan d'encastrement n'est pas dans un plan de symétrie et le centre se déplace sous l'effet des contraintes radiales. Les variations du zéro du capteur qui en résultent dans ce cas sont très génantes pour un certain nombre d'applications. Le brevet britannique GB-A-749 551 montre un diaphragme présentant des ondulations non symétriques en forme de pointes de diamant.

Pour remédier à cet inconvénient des diaphragmes ondulés classiques, l'objet principal de l'invention est de fournir un diaphragme ondulé qui présente l'avantage des diaphragmes ondulés de révolution, c'est-à-dire une réponse linéaire dans un domaine de déplacements étendu mais qui ne présente pas un zéro sensible aux variations de température, de pression statique et de serrage de sa périphérie.

Pour atteindre ce but, un diaphragme, selon l'invention, est réalisé à partir d'une feuille mince métallique comportant une zone périphérique plane disposées dans un plan d'encastrement ; une zone centrale plane disposée dans ledit plan d'encastrement et présentant un centre, et, entre ladite zone périphérique plane et ladite zone centrale plane, une zone ondulée constituée par 2n portions ondulées, n étant un nombre entier, chaque portion ondulée s'étendant de ladite zone centrale plane à ladite zone périphérique plane, n portions ondulées étant d'un premier type et les n autres portions ondulées étant d'un deuxième type, et il se caractérise en ce qu'une portion ondulée du premier type se déduit de la portion ondulée adjacente, qui est du deuxième type, par une transformation géométrique choisie dans le groupe comprenant une première transformation consistant en une rotation de 180° autour d'un segment de droite disposé dans ledit plan d'encastrement et s'étendant depuis ledit centre jusqu'à ladite zone périphérique et une deuxième transformation géométrique consistant en une rotation d'un angle de $2\pi/2n$ autour de l'axe dudit diaphragme perpendiculaire au plan d'encastrement et passant par ledit centre suivie d'une symétrie par rapport audit plan d'encastrement.

On obtient ainsi un diaphragme qui comporte n portions ondulées d'un premier type et n portions ondulées du deuxième type. Compte tenu des relations géométriques qui existent entre les portions ondulées des deux types, le plan d'encastrement du diaphragme constitue en même temps un plan de symétrie de fonctionnement pour le diaphragme vis-à-vis des contraintes radiales induites par les variations de rayon provoquées par les phénomènes parasites déjà mentionnés.

Selon un premier mode de mise en œuvre deux portions ondulées adjacentes sont séparées par une zone de raccordement disposée de part et d'autre d'une portion de courbe disposée dans ledit plan d'encastrement et s'étendant de ladite zone centrale à ladite zone périphérique ladite portion de courbe étant ledit segment lorsque ladite première transformation est mise en œuvre.

De préférence alors n est pair. Ainsi, deux portions ondulées opposées par le sommet sont d'un même type, c'est-à-dire identiques. Par raison de symétrie toute la zone centrale reste perpendiculaire à l'axe de symétrie de la membrane y compris pendant le déplacement.

De préférence encore, les crêtes des ondulations se projettent orthogonalement sur le plan d'encastrement sur des cercles concentriques, et les portions de courbe sont des segments de droite passant par le centre commun desdits cercles.

Selon un deuxième mode de mise en œuvre une portion ondulée se déduit de la portion ondulée adjacente par ladite deuxième transformation, et chaque portion ondulée consiste en une unique ondulation s'étendant de la zone centrale à la zone périphérique, la crête de ladite ondulation se projetant sur ledit plan d'encastrement selon une portion de courbe en forme de spirale s'étendant de ladite zone centrale à la zone périphérique.

D'autres caractéristiques et avantages de l'invention apparaîtront plus clairement à la lecture de la description qui suit de plusieurs modes de réalisation de l'invention donnés à titre d'exemples non limitatifs. La description se réfère au dessin annexé sur lequel :

— la figure 1 est une vue de dessus d'un premier mode de réalisation d'un diaphragme conforme à l'invention ;

— la figure 2 est une vue en section verticale selon la ligne brisée II-II' de la figure 1, du premier mode de réalisation du diaphragme ;

— la figure 3 est une vue en section verticale selon la ligne III-III' de la figure 1 du premier mode de réalisation du diaphragme ;

— la figure 4 est une vue développée en coupe verticale selon l'arc de cercle IV-IV de la figure 1 ;

— la figure 5 est une vue semblable à celle de la figure 4, mais montrant une première variante du premier mode de réalisation du diaphragme ;

— la figure 6 est une vue de dessus d'une deuxième variante du premier mode de réalisation du diaphragme selon l'invention ; et

— la figure 7 est une vue de dessus d'une troisième variante du premier mode de réalisation du diaphragme selon l'invention ;

— la figure 8a est une vue de dessus d'un deuxième mode de réalisation du diaphragme ;

— les figures 8b et 8c sont des vues en coupe selon les lignes BB et CC de la figure 8a ;

— la figure 9a est une vue de dessus d'un troisième mode de réalisation du diaphragme ;

— les figures 9b et 9c sont des coupes selon les lignes DD et EE de la figure 9a ; et

— les figures 10 à 10b illustrent un quatrième mode de réalisation du diaphragme, respectivement en vue de dessus et en coupe selon les lignes MM' et MS de la figure 10.

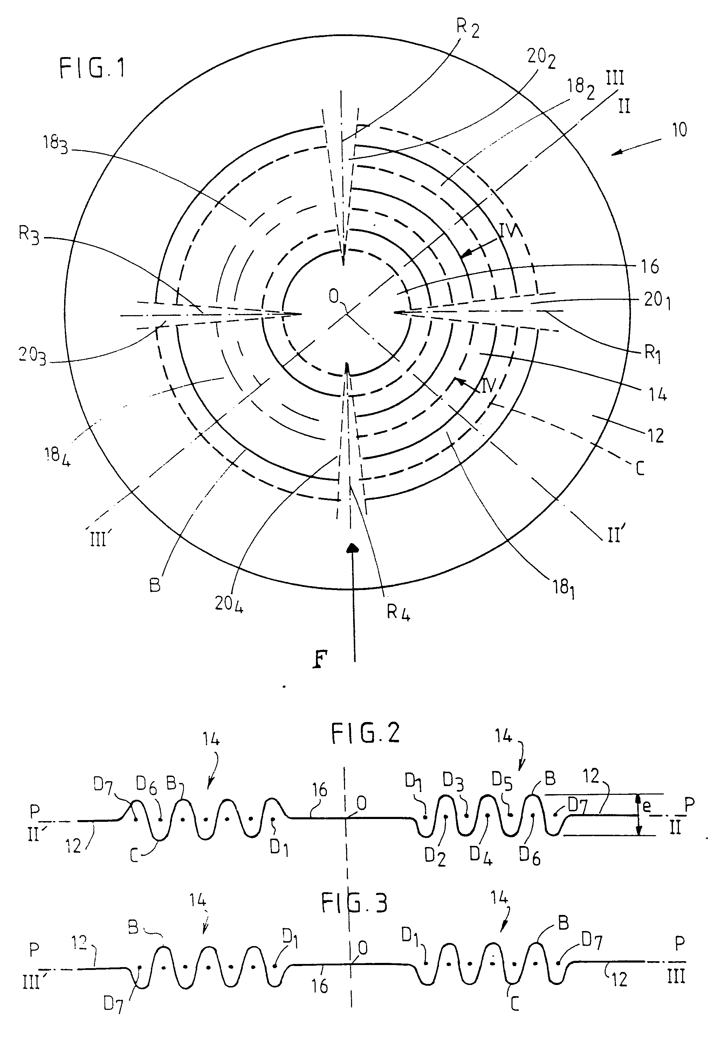

En se référant tout d'abord aux figures 1 à 4, on va décrire un premier mode de réalisation du diaphragme.

La figure 1 montre en vue de dessus une face du diaphragme. Il a la forme générale d'un disque 10 de centre O. Le disque est formé dans une feuille mince, par exemple en acier inoxydable, dont l'épaisseur est de 1/10e de millimètre selon le mode de réalisation décrit. La feuille est usinée, par exemple par emboutissage, pour définir depuis sa périphérie jusqu'à son centre O une zone périphérique plane 12, une zone ondulée 14 et une zone centrale circulaire 16, également plane, ayant comme centre le point O. La zone périphérique 12 est disposée dans un plan P (figure 2) qui est appelé plan d'encastrement. La zone centrale 16, également plane, est disposée également dans le plan.

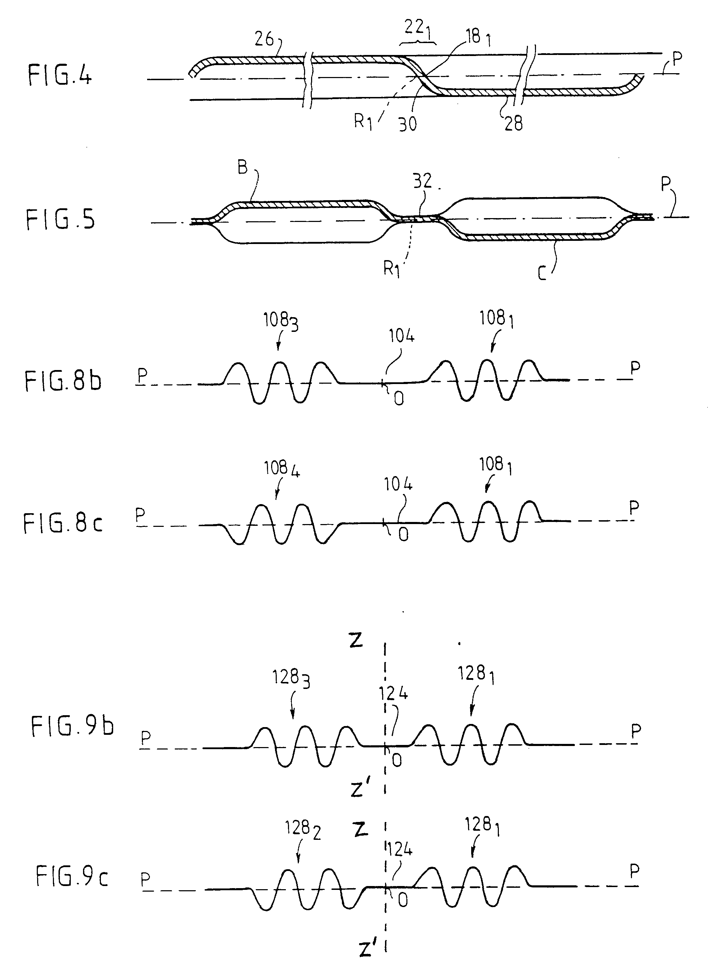

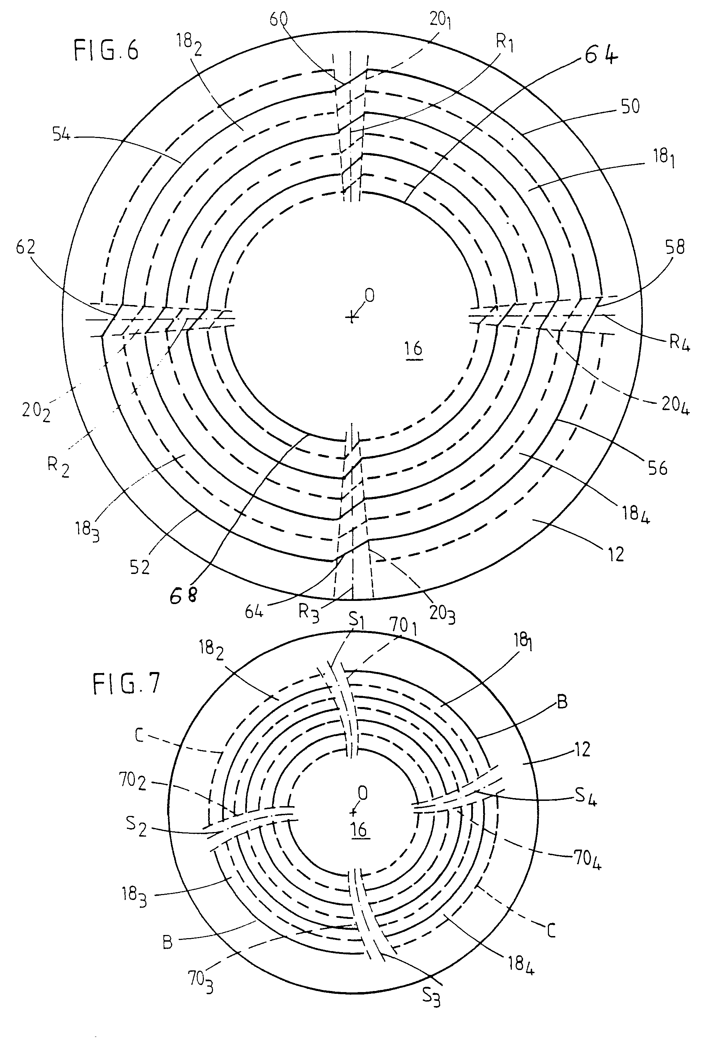

La zone ondulée 14 est constituée par $2n$ portions ondulées, $n$ étant un nombre entier. De préférence, $n$ est de la forme $n = 2k$, $k$ étant un entier. Sur la figure 1, $k$ vaut un et les quatre portions ondulées sont référencées $18_1$ à $18_4$. Les portions ondulées $18_1$ à $18_4$ sont séparées les unes des autres par quatre zones de raccordement référencées $20_1$ à $20_4$. Chaque zone de raccordement est disposée de part et d'autre d'une portion de courbe qui s'étend de la zone centrale 16 jusqu'à la zone périphérique 12 et qui est disposée dans le plan d'encastrement P. Plus généralement, il y a $2n$ zones de raccordement. Dans le cas de la figure 1, les portions de courbe sont des segments de droite $R_1$ à $R_4$ qui appartiennent à des droites passant par le centre O du disque 10. La zone de raccordement $20_1$ est disposée selon le segment $R_1$, la zone $20_2$ selon le segment $R_2$, etc. Deux segments consécutifs font entre eux un angle de 90° ou, plus généralement, de 360°/2n. Une définition plus précise des zones de raccordement sera donnée ultérieurement en liaison avec les figures 4 à 7.

Dans chaque portion ondulée $18_1$ à $18_4$, on trouve des ondulations qui, si on considère une face du diaphragme, se présentent sous la forme d'une alternance de bosses B, figurées en trait plein sur la figure 1, et de creux C, figurés en pointillés sur cette même figure. Chaque portion ondulée comprend Q ondulations. Q vaut sept dans l'exemple considéré. Les crêtes des ondulations se projettent orthogonalement sur le plan P sur Q cercles $D_1$ à $D_7$ centrés au point 0. Sur les figures 2 et 3, on a représenté des intersections de ces cercles par les plans de coupe. Ainsi, les ondulations de rang 4 des quatre portions ondulées se projettent sur le même cercle $D_4$.

Selon le premier mode de réalisation, les ondulations de deux portions ondulées adjacentes se projetant sur un même cercle sont respectivement une bosse B et un creux C. Par exemple, l'ondulation de rang 4 de la portion $18_1$ est une bosse B, alors que l'ondulation de même rang de la portion $18_4$ est un creux C. Cela apparaît clairement sur la figure 2. Au contraire, la figure 3 montre que les ondulations de même rang appartenant aux portions opposées $18_1$ et $18_3$ sont toutes les deux, soit une bosse B, soit un creux C. De plus, les ondulations se projetant sur un même cercle se projettent toutes selon des arcs de cercle ayant la même longueur. Si l'on considère les ondulations se projetant sur un même cercle, l'on a donc la même longueur de creux et de bosses.

Dans l'exemple représenté sur les figures 1 à 4, les ondulations ont toutes la même profondeur e. La distance crête à crête est égale à 0,8 mm. Bien entendu, comme cela est connu, les ondulations les plus proches du centre pourraient avoir une profondeur inférieure à celles qui se trouvent plus près de la périphérie. Cependant, dans ce cas, les ondulations (creux ou bosses) se projetant sur un même cercle présentent la même profondeur.

Plus généralement, selon le premier mode de réalisation, le diaphragme comprend n portions ondulées d'un premier type, toutes identiques, et n portions ondulées d'un deuxième type, toutes identiques. Une portion ondulée d'un premier type se déduit de la portion ondulée adjacente de l'autre type par une rotation de $2\pi/2n$ autour du centre 0 suivie d'une symétrie par rapport au plan d'encastrement P.

La figure 4 montre un premier mode de réalisation des zones de raccordement. Il s'agit, par exemple, de la zone de raccordement $20_1$. La zone de raccordement résulte de la combinaison de sept zones de transition, telles que $22_1$ permettant le passage entre une bosse B et un creux C se projetant sur un même cercle $D_1$ à $D_7$. Dans la section cylindrique de la figure 4, on trouve la crête 26 de la bosse B, la crête 28 du creux C et la section de la surface de raccordement 30 entre la bosse et le creux. Dans ce cas, on a un raccordement direct entre une bosse et un creux.

Si l'on considère le diaphragme décrit précédemment et pour lequel, de plus, le diamètre extérieur vaut 50 mm, le diamètre du cercle $D_7$ vaut 40 mm et le diamètre du cercle $D_1$ vaut 12 mm, les essais ont donné les résultats suivants : la variation sur le zéro est très inférieure à 0,5 % pour une variation de température de 100 °C et elle est inférieure à 0,1 % pour une variation de la pression statique de 100 bars. Si l'on considère un diaphragme ayant exactement les mêmes caractéristiques, mais comportant des ondulations classiques, c'est-à-dire un diaphragme de révolution, les chiffres énoncés ci-dessus doivent respectivement être multipliés par 10 et par 5.

Selon la variante de réalisation de la figure 5, le raccordement entre la crête 26 d'une bosse B et la crête 28 d'un creux C se fait par l'intermédiaire d'une portion de surface plane dont la section est référencée 32. Les portions de surface plane sont disposées dans le plan moyen P du diaphragme. L'ensemble des portions de surface plane 32 forme la zone de raccordement $20_1$ qui est disposée selon le segment $R_1$.

La figure 6 montre une autre variante de réalisation des zones de raccordement $20_1$ à $20_4$ qui sont toujours disposées selon les segments de droite $R_1$ à $R_4$. Selon cette variante de réalisation, les bosses appartenant aux deux portions ondulées où se trouvent les bosses les plus éloignées du centre O, c'est-à-dire celles qui se projettent sur le cercle $D_7$, sont raccordées aux bosses des deux autres portions ondulées les plus éloignées du centre, c'est-à-dire celles qui se projettent sur le cercle $D_6$. Dans l'exemple représenté sur la figure 6, les deux premières bosses qui sont référencées 50 et 52 appartiennent respectivement aux portions ondulées $18_1$ et $18_3$, et les deux autres bosses, qui sont respectivement référencées 54 et 56, appartiennent aux portions ondulées $18_2$ et $18_4$. Le raccordement se fait par des « portions de bosses », référencées 58, 60, 62, 64, qui coupent obliquement les segments de droite $R_1$ à $R_4$. Il en va de même pour les bosses se projetant selon les autres cercles. Seules les bosses 66 et 68 des portions ondulées $18_1$ et $18_3$ se projetant sur le cercle $D_1$ ne sont pas raccordées. Les creux se raccordent de la même manière.

Dans certains cas d'utilisation des diaphragmes, on peut craindre que les zones de raccordement, disposées selon des « rayons » du disque 10 formant le diaphragme, n'entraînent un moins bon comportement de ce diaphragme. Selon la variante de réalisation de la figure 7, les zones de raccordement référencées $70_1$ à $70_4$ sont disposées selon des portions de spirales $S_1$ à $S_4$ décalées les unes des autres de 90°. Les cercles $D_1$ à $D_7$ coupent toutes ces spirales $S_1$ à $S_4$ selon le même angle. Comme dans les variantes de réalisations précédentes, si l'on considère les ondulations des deux portions ondulées disposées de part et d'autre d'une zone de raccordement et se projetant sur un même cercle $D_1$ à $D_7$, on trouve une bosse dans une des portions ondulées et un creux dans l'autre. C'est ce que montre la figure 7 où l'on a adopté les mêmes conventions que sur la figure 1 pour représenter les creux et les bosses.

Il faut encore ajouter que, dans le cas où la tôle dont est fait le diaphragme est obtenue par laminage, il faut de préférence que deux des zones de raccordement alignées soient disposées selon la direction de laminage. Sur la figure 1, on a symbolisé par la flèche F la direction du laminage. Les zones de raccordement $20_2$ et $20_4$ sont disposées selon la direction de laminage définie par la flèche F.

Dans le premier mode de réalisation décrit en référence aux figures 1 à 7, les crêtes des ondulations, c'est-à-dire des creux et des bosses, se projettent orthogonalement sur le plan d'encastrement P sur des cercles concentriques dont le centre est confondu avec celui du diaphragme.

Les figures 8a et 8c montrent un deuxième mode de réalisation du diaphragme, dans lequel les ondulations ont d'autres formes.

La figure 8a montre un diaphragme 100 de forme non circulaire. Ce diaphragme comprend une zone périphérique plane 102, une zone centrale plane 104 contenant le centre 0 du diaphragme, et une zone ondulée 106 disposée entre les zones 102 et 104. Les zones 102 et 104 sont situées dans le plan d'encastrement P.

La zone ondulée 106 est constituée par quatre portions ondulées $108_1$ à $108_4$ séparées par quatre zones de raccordement $110_1$ à $110_4$. Chaque zone de raccordement $110_1$ à $110_4$ est disposée de part et d'autre d'un des quatre segments de droite $R'_1$ à $R'_4$ dont les prolongements passent par le centre O du diaphragme, les segments $R'_1$ à $R'_4$ étant situés dans le plan d'encastrement P. Deux segments consécutifs font entre eux un angle de 90°. Chaque portion ondulée $108_1$ à $108_4$ est constituée par une alternance de bosses B et de creux C. Comme le montre la figure 8a les portions ondulées $108_1$ et $108_3$ sont identiques et dites d'un premier type, et les portions ondulées $108_2$ et $108_4$ sont identiques et dites d'un deuxième type. Selon ce deuxième mode de réalisation, la forme et la disposition des ondulations sont telles qu'une portion ondulée d'un type, par exemple la portion $108_1$ du premier type se déduit d'une portion adjacente qui est de l'autre type, par exemple la portion ondulée $108_2$ qui est du deuxième type, par une rotation de 180° autour du segment $R'_2$ qui définit la zone de raccordement $110_2$ séparant les portions ondulées $108_1$ et $108_2$. De même la portion ondulée $108_2$ se déduit de la portion ondulée $108_3$ par une rotation de 180° autour de la droite portant le segment $R'_3$ etc.

Plus généralement, la diaphragme peut comporter 2n portions ondulées et 2n zones de raccordement. Il y a n portions ondulées du premier type et n du second. La relation géométrique entre les différentes portions ondulées imposent que toutes les portions ondulées comportent le même nombre d'ondulations.

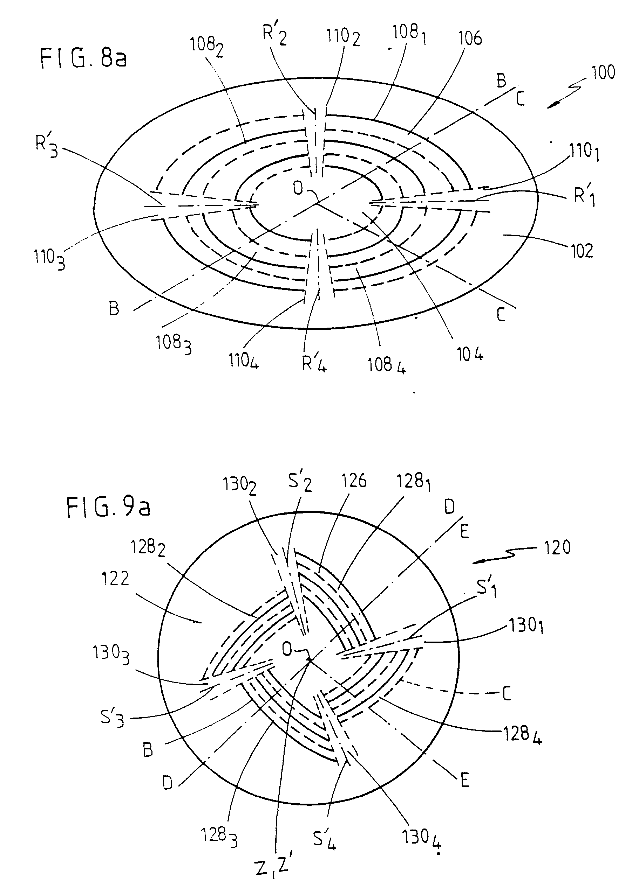

Les figures 9a à 9c illustrent un troisième mode de réalisation du diaphragme. Ce diaphragme 120 a la forme générale d'un disque de centre 0. Il comprend une zone périphérique plane 122 une zone centrale plane 124 et une zone ondulée 126 disposée entre la zone centrale et la zone périphérique. Les zones 122 et 124 sont disposées dans le plan d'encastrement P.

La zone ondulée 126 est formée par quatre portions ondulées $128_1$ à $128_4$ séparées par quatre zones de raccordement $130_1$ à $130_4$. Dans l'exemple de réalisation particulier du troisième mode de réalisation, chaque zone de raccordement est disposée de part et d'autre d'une parmi quatre portions de spirale $S'_1$ à $S'_4$ situées dans le plan d'encastrement P. Deux portions de spirale consécutives font entre elles un angle de 90°.

Cependant, les zones de raccordement $130_1$ à $130_4$ pourraient être disposées selon des segments de droite comme dans le mode de réalisation de la figure 8a. Les portions ondulées $128_1$ et $128_3$ sont identiques et d'un premier type, alors que les portions ondulées $128_2$ et $128_4$ sont également identiques et d'un deuxième type. Chaque portion ondulée $128_1$ à $128_4$ est constituée par une succession d'ondulations formant alternativement des bosses B et des creux C.

Selon ce troisième mode de réalisation du diaphragme on passe d'une portion ondulée du premier type (par exemple la portion $128_1$) à une portion adjacente qui est du deuxième type (par exemple la portion $128_2$) par une rotation de 90° autour d'un axe ZZ' passant par le centre 0 et perpendiculaire au plan d'encastrement P suivie d'une symétrie par rapport au plan d'encastrement P.

Plus généralement, le diaphragme selon le troisième mode de réalisation comprend 2n portions ondulées et 2n zones de raccordement. Chaque portion ondulée correspond à un angle au centre égal à $2\pi/2n$ moins l'angle au centre correspondant à une zone de raccordement. Il y a ainsi n portions ondulées du premier type et n du deuxième. On passe d'une portion ondulée qui est d'un premier type à une des deux portions ondulées adjacentes, qui est un deuxième type par une rotation de $2\pi/2n$ autour de l'axe ZZ' et par une symétrie par rapport au plan d'encastrement P. En outre, il faut bien comprendre que lorsqu'on indique que chaque zone de raccordement est disposée de part et d'autre d'une portion de courbe, cela est vrai aussi bien en projection dans le plan de raccordement, que dans une surface contenant la portion de courbe et orthogonale au plan d'encastrement.

Selon ce troisième type de réalisation du diaphragme toutes les portions ondulées $128_1$ à $128_4$ comportent le même nombre d'ondulations.

On comprend que le premier mode de réalisation selon lequel les ondulations se projettent sur le plan d'encastrement sur des cercles concentriques, constitue un cas limite entre le deuxième mode de réalisation de la figure 8a et le troisième mode de réalisation de la figure 9a. En effet, en se reportant à la figure 1 on voit qu'une zone portion ondulée du premier type (par exemple la portion $18_1$) se déduit d'une portion ondulée de l'autre type (par exemple la portion $18_2$) soit par une rotation de 180° autour du segment de droite $R_1$, soit par une rotation de 90° autour du centre 0 suivie d'une symétrie par rapport au plan d'encastrement P.

Dans les modes de réalisation décrits jusqu'ici chaque portion ondulée est constituée par une pluralité d'ondulations formant alternativement des creux et des bosses. Lorsque l'on passe d'un creux à une bosse, la tôle formant le diaphragme coupe le plan d'encastrement selon une portion de courbe.

En outre, le passage d'une portion ondulée à la portion ondulée suivante se fait par une zone de raccordement disposée selon une portion de courbe située dans le plan d'encastrement. Ces deuxièmes portions de courbe sont soit des segments de droite soit des courbes relativement proches de segments de droite et faisant dans tous les cas un angle non négligeable avec les portions de courbes correspondant au passage d'une ondulation d'une portion ondulée à l'ondulation adjacente de la même portion ondulée. Cette disposition peut dans certains cas d'utilisation créer des défauts de linéarité dans la réponse du diaphragme déplacement/pression différentielle incompatibles avec les tolérances à respecter.

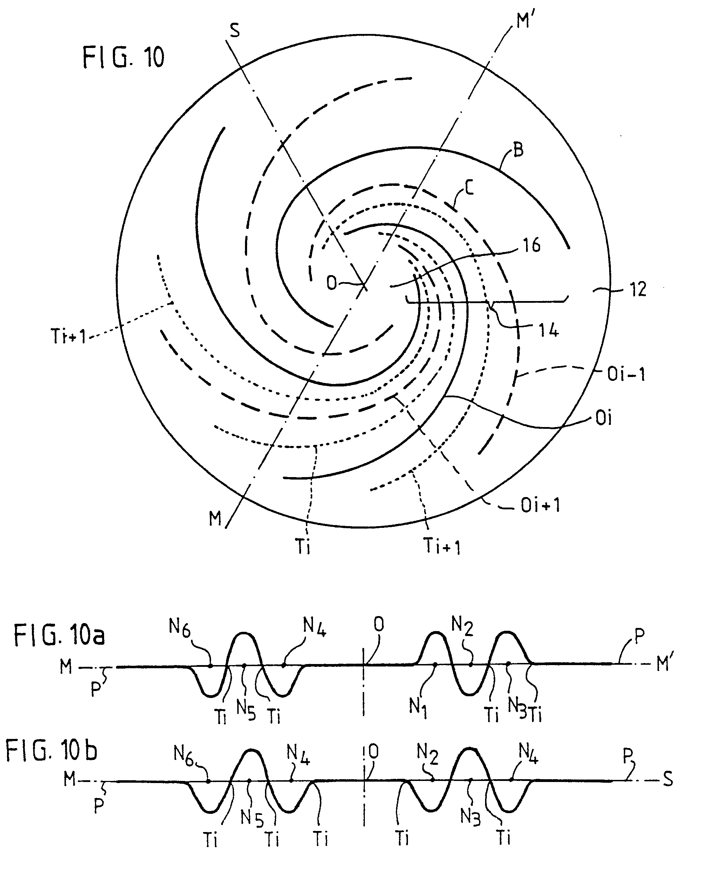

Dans ce cas, on peut utiliser un diaphragme selon un autre mode de réalisation qui va être décrit ci-après en liaison avec les figures 10 à 10b.

Comme on le voit sur la figure 10, le diaphragme comprend une zone plane périphérique 12 définissant le plan P d'encastrement du diaphragme, une zone centrale plane 16 disposée dans le plan d'encastrement P et présentant un centre O et une zone ondulée 14 s'étendant entre la zone centrale 16 et la zone périphérique 12.

La zone ondulée 14 est constituée par 2n ondulations. Plus précisément, si l'on considère la face du diaphragme visible sur la figure 10, la zone 14 comprend n bosses symbolisées par des traits continus et repérés B et n creux symbolisés par des traits en pointillés et repérés C. Sur la figure 10, le nombre n est égal à 3. Selon ce mode de réalisation, les crêtes des bosses B et des creux C se projettent orthogonalement sur le plan d'encastrement P selon des portions de courbe $N_1$ à $N_{2n}$ ($N_1$ à $N_6$ dans le cas de la figure 10) ayant la forme générale de spirales. De plus, une de ces courbes $N_i$ se déduit de la courbe adjacente $N_{i-1}$ ou $N_{i+1}$ par une rotation de $+2\pi/2n$ ou $-2\pi/2n$ autour de l'axe du diaphragme passant par le centre O et perpendiculaire au plan d'encastrement P. En outre, si l'ondulation associée à la courbe $N_i$ est un creux, les ondulations $O_{i-1}$ ou $O_{i+1}$ associées aux courbes $N_{i-1}$ ou $N_{i+1}$ sont des bosses. Les ondulations sont de plus telles qu'une ondulation $O_i$ se déduit de l'ondulation adjacente $O_{i-1}$ ou $O_{i+1}$ pour une rotation de $\pm 2\pi/2n$ suivie d'une symétrie par rapport au plan d'encastrement P.

Si l'on compare ce mode de réalisation à ceux des figures précédentes, on voit que la zone ondulée 14 est encore constituée par 2n portions ondulées, mais que chaque portion ondulée se réduit à une seule ondulation $O_i$ se projetant orthogonalement sur le plan d'encastrement P selon une courbe en forme de spirale. Ainsi une portion ondulée se déduit encore d'une portion adjacente par une rotation de $2\pi/2n$ autour de l'axe du diaphragme suivie d'une symétrie par rapport au plan d'encastrement.

On peut de plus considérer que les zones de raccordement des modes de réalisation des figures 1 à 9 se réduisent, dans le mode de réalisation des figures 10, à une portion de courbe définie par l'intersection de la tôle formant le diaphragme avec le plan d'encastrement P dans la zone de passage entre une bosse et un creux adjacents. Ces courbes repérées $T_i$ sur les figures 10 à 10b ont également la forme d'une portion de spirale.

Il faut préciser que par « courbe en forme de spirale » on entend une courbe dont la concavité est toujours tournée vers le centre O du diaphragme et telle que la distance entre le point O et le point courant de la courbe augmente de façon continue lorsque le point courant décrit la courbe depuis la zone centrale jusqu'à la zone périphérique. Il peut s'agir d'une courbe constituée par des arcs de cercle de centres et de rayons différents, raccordés tangentiellement.

De préférence, dans ce dernier mode de réalisation, le nombre n est impair. Par exemple, il est égal à 3 ou 5. Avec un tel nombre d'ondulations (2n) on s'affranchit des problèmes liés à la direction de laminage de la tôle servant à réaliser le diaphragme.

## Revendications

1. Diaphragme ondulé pour capteur de pression, réalisé à partir d'une feuille mince métallique et comportant une zone périphérique plane (12) disposée dans un plan d'encastrement (P), une zone centrale plane (16) disposée dans ledit plan d'encastrement (P) et présentant un centre (O) et, entre ladite zone périphérique plane (12) et ladite zone centrale plane (16), une zone ondulée (14) constituée par 2n portions ondulées (18, 108), n étant un nombre entier, chaque portion ondulée (18, 118) s'étendant de ladite zone centrale plane (16) à ladite zone périphérique plane (12), n portions ondulées (18, 108) étant d'un premier type ($18_1$) et les n autres portions ondulées étant d'un deuxième type ($18_2$), caractérisé en ce qu'une portion ondulée du premier type ($18_1$) se déduit de la portion ondulée adjacente, qui est du deuxième type ($18_2$), par une transformation géométrique choisie dans le groupe comprenant une première transformation consistant en une rotation de 180° autour d'un segment de droite disposé dans ledit plan d'encastrement (P) et s'étendant depuis ledit centre (O) jusqu'à ladite zone périphérique plane (12), et une deuxième transformation géométrique consistant en une rotation d'un angle de $2\pi/2n$ autour de l'axe dudit diaphragme perpendiculaire au plan d'encastrement (P) et passant par ledit centre (O) suivie d'une symétrie par rapport audit plan d'encastrement (P).

2. Diaphragme selon la revendication 1, caractérisé en ce que deux portions ondulées adjacentes sont séparées par une zone de raccordement ($20_i$, $110_i$, $130_i$), disposée de part et d'autre d'une portion de courbe ($R_i$, $S_i$, $R'_i$, $S'_i$, $T_i$) disposée dans ledit plan d'encastrement (P) et s'étendant de ladite zone centrale (16) à ladite zone périphérique (12), ladite portion de courbe étant ledit segment lorsque ladite première transformation est mise en œuvre.

3. Diaphragme selon la revendication 2, caractérisé en ce que le nombre n est pair.

4. Diaphragme selon la revendication 2, caractérisé en ce que chaque portion ondulée comprend Q ondulations et les crêtes des Q ondulations se projettent orthogonalement sur ledit plan d'encastrement sur Q cercles concentriques ($D_1$ à $D_4$).

5. Diaphragme selon la revendication 1, caractérisé en ce qu'une portion ondulée se déduit de la portion ondulée adjacente par ladite deuxième transformation, et chaque portion ondulée consiste en une unique ondulation ($O_i$) s'étendant de la zone centrale (16) à la zone périphérique (12), la crête de ladite ondulation se projetant sur ledit plan d'encastrement selon une portion de courbe ($N_i$) en forme de spirale s'étendant de ladite zone centrale à la zone périphérique.

6. Diaphragme selon la revendication 5, caractérisé en ce que le nombre n est impair.

## Claims

1. A corrugated diaphragm for a pressure sensor made from a thin metal sheet and comprising a plane peripheral zone (12) disposed in a housing plane (P), a plane central zone (16) disposed in said housing plane (P) and having a center (O) and, between said plane peripheral zone (12) and said plane central zone (16), a corrugated zone (14) constituted by 2n corrugated portions (18, 108), n being an integer, each corrugated portion (18, 118) extending from said plane central zone (16) to said plane peripheral zone (12), n corrugated portions (18, 118) being of a first type ($18_1$) and the other n corrugated portions being of a second type ($18_2$), characterized in that a corrugated portion of the first type ($18_1$) is related from the adjacent corrugated portion, which is of the second type ($18_2$), by a geometrical transformation chosen from the group comprising a first transformation consisting in a 180° rotation about a rectilinear segment disposed in the said housing plane (P) and extending from said center (O) to said plane peripheral zone (12) ; and a second geometrical transformation consisting in a rotation through an angle of 2/2n about the axis of said diaphragm perpendicular to the housing plane (P) and passing through said center (O), followed by a symmetry about said housing plane (P).

2. Diaphragm according to claim 1, characterized in that two adjacent corrugated portions are separated by a connection zone ($20_1$, $110_1$, $130_1$) disposed on either side of a portion of a curve ($R_1$, $S_1$, $R'_1$, $S'_1$, $T_1$) disposed in said housing plane (P) and extending from said central zone (16) peripheral zone (12), said portion of curve being said segment when said first transformation is used.

3. Diaphragm according to claim 2, characterized in that the number n is even.

4. Diaphragm according to claim 2, characterized in that each corrugated portion comprises Q corrugations and the peaks of the Q corrugations project orthogonally in the said housing plane onto Q concentric circles ($D_1$ to $D_4$).

5. Diaphragm according to claim 1, characterized in that a corrugated portion is related to the adjacent corrugated portion by said second transformation, and each corrugated portion consists in a single corrugation ($O_1$) extending from the central zone (16) to the peripheral zone (12), the peak of said corrugation projecting in said housing plane along a portion of curve ($N_i$) having the shape of a spiral extending from said central zone to said peripheral zone.

6. Diaphragm according to claim 5, characterized in that the number n is odd.

## Patentansprüche

1. Gewellte Membran für einen Druckgeber, die aus einer dünnen metallischen Folie hergestellt ist und die einen ebenen Randbereich (12), angeordnet in einer Einbauebene (P), eine zentrale Ebene (16), angeordnet in der besagten Einbauebene (P), und die einen Mittelpunkt (O) aufweist und zwischen besagtem ebenen Randbereich (12) und besagtem ebenen Zentralbereich (16) einen gewellten Bereich (14) enthält, der aus 2n gewellten Teilen (18, 108) besteht, wobei n eine ganze Zahl ist, und wobei sich jeder gewellte Teil (18, 108) von dem besagten ebenen Zentralbereich (16) bis zum besagten ebenen Randbereich (12) erstreckt und wobei n gewellte Teile (18, 108) von einem ersten Typ ($18_1$) sowie die n anderen gewellten Teile von einem zweiten Typ ($18_2$) sind, dadurch gekennzeichnet, daß sich ein gewellter Teil vom ersten Typ ($18_1$) von dem gewellten benachbarten Teil, der von einem zweiten Typ ($18_2$) ist, durch eine geometrische Transformation ableitet, die aus der Gruppe gewählt ist, die eine erste Transformation, die aus einer Drehung um 180° um ein Geradensegment besteht, das in der besagten Einbauebene (P) angeordnet ist und sich von dem besagten Mittelpunkt (O) bis zum besagten ebenen Randbereich (12) erstreckt, und eine zweite geometrische Transformation enthält, die aus einer Drehung um den Winkel 2π/2n um die Achse besagter Membran, die senkrecht zu der Einbauebene (P) ist und durch den besagten Mittelpunkt (O) geht, besteht, gefolgt von einer in bezug auf besagte Einbauebene (P) symmetrische Abbildung.

2. Membran gemäß Patentanspruch 1, dadurch gekennzeichnet, daß zwei benachbarte gewellte Teile durch einen Verbindungsbereich (20i, 110i, 130i) getrennt sind, der auf der einen Seite und auf der anderen Seite eines Kurvenstückes (Ri, Si, Ri', Si', Ti) in der besagten Einbauebene (P) angeordnet ist und sich von dem besagten Zentralbereich (16) bis zum besagten Randbereich (12) erstreckt, wobei dieses Kurvenstück besagtes Segment ist, wenn die erste Transformation wirksam wird.

3. Membran gemäß Patentanspruch 2, dadurch gekennzeichnet, daß die Zahl n gerade ist.

4. Membran gemäß Patentanspruch 2, dadurch gekennzeichnet, daß jeder gewellte Teil O Wellungen enthält und die senkrechten Projektionen der Scheitel auf die Einbauebene auf O konzentrischen Kreisen (D1 bis D4) liegen.

5. Membran gemäß Patentanspruch 1, dadurch gekennzeichnet, daß ein gewellter Teil sich von einem gewellten benachbarten Teil durch besagte zweite Transformation ableitet und jeder gewellte Teil aus einer einzigen Wellung (Oi) besteht, die sich von dem Zentralbereich (16) bis zum Randbereich (12) erstreckt, wobei die Projektion des Scheitels der Wellung auf die Einbauebene einen Kurventeil (Ni) in Form einer Spirale bildet, der sich von diesem Zentralbereich bis zum Randbereich erstreckt.

6. Membran gemäß Patentanspruch 5, dadurch gekennzeichnet, daß die Zahl n ungerade ist.

FIG.1

FIG.2

FIG.3

FIG.4

FIG.5

FIG.8b

FIG.8c

FIG.9b

FIG.9c

2

FIG.6

FIG.7

FIG. 8a

FIG. 9a

FIG. 10

FIG. 10a

FIG. 10b